# EUROPEAN PATENT APPLICATION

(11) **EP 3 571 937 A1**
(43) Date of publication of application: **27.11.2019**
(21) Application number: 18174099.4
(22) Date of filing: 24.05.2018
(51) Int. Cl.: A23P 30/00, H05B 6/12, B29C 64/20, B29C 64/209, B29C 64/295

(54) **FOOD PRINTER**

(71) Applicant: BSH Hausgeräte GmbH, 81739 München (DE)
(72) Inventor: Danton Gamini, Obeyesekere, Cambridge, CB22 7GG (GB); Forbes, Andrew, Cambridge, CB22 7GG (GB); Schuster, Lucia, 70173 Stuttgart (DE); Triggs, Emily, Cambridge, CB22 7GG (GB); Vismer, Mark, Cambridge, CB22 7GG (GB)

(57) **Abstract**

A food printer (1), comprises at least one seat (3) for holding a food container (2) and a heating means (14, 15) for heating a food container (held in the seat, wherein the heating means comprises at least one induction coil (14). A food container (2) for inserting into the food printer (1) comprises at least one induction-heatable body (11). A system (1, 2) comprises the food printer (1) and at least one food container, wherein the food container (2) is held in a seat (3) and the at least one induction coil of the food printer (1) is adapted to heat the at least one induction-heatable body (11) of the food container (2) by inductive heating. A method is presented for operating a food printer (1), wherein an alternating electrical current (C) is applied to at least one induction coil (14) of the food printer (1).

## Description

The invention relates to a food printer, comprising at least one seat for holding a food container and a heating means for heating a food container held in the seat. The invention also relates to a food container for being inserted into the food printer. The invention further relates to a system, comprising the food printer and at least one food container, wherein the food container is held in a seat and the food printer is adapted to heat the food container. The invention also relates to a method for operating a food printer. The invention is particularly useful for 3D printing of foodstuff.

WO 2014/190168 A1 discloses an additive manufacturing ("AM") 3D printer system that uses the AM method to print a product using a plurality of materials, each of which is contained in a respective capsule. The capsules are removably inserted into respective capsule holders, each of which includes a heating device for adjusting the temperature of the material and is releasably held in one of a plurality of stations. A tool fetches individual capsules from and deposits them to their stations and holds individual capsules for printing the product using a telescopic extrusion apparatus. A memory stores capsule-identifying data, a processor provides position coordinates for positioning of the tool, and a controller moves the tool to the position coordinates. The capsule holders include heating systems for controlling the rheological behaviour of the materials based on algorithms executed by the processor.

US 20170295816 A1 discloses a 3D food printer, which comprises a large hopper in a print head with a cooling system, so as to store and supply a large amount of a food material and print reliably at a high ambient temperature, and an automatic conveying system for printed products, so as to automatically output the food product after printing it, and then proceed with the next one. These features make the printer more effective, easier to operate, and in line with the requirements of food hygiene. The technical solution includes: the 3D food printer comprising a print head for extruding a food material; a cooling system for keeping the food material at a low temperature at which the food material does not melt or agglomerate; a conveying system for automatically outputting a printed food product; a frame for supporting the entire 3D food printer; a drive system for driving the 3D food printer to move in the X-, Y- and Z-directions; and a control system for controlling the operation of the entire 3D food printer.

WO 2017/014457 A1 discloses a 3D printer using a metal alloy filament, wherein the 3D printer introduces a metal alloy filament through a nozzle formed inside an induction heating coil, melts and extrudes the filament, and laminates the filament three-dimensionally inside a chamber heated to a similar temperature. The 3D printer forcibly introduces a metal alloy filament in a nozzle, heated by an induction heating coil which circularly encloses the exterior of the nozzle and forms a cooling passage therein, by means of a transfer gear connec-ted to a transfer motor. A 3D printer for a metal alloy filament is provided in which, in order to prevent the oxidation of a metal alloy laminate, an inert gas is introduced, the out-side and heat and air are blocked, and a metal alloy filament that is melted in a nozzle and extruded is laminated one layer at a time on a floor plate installed inside a heated chamber and moving three-dimensionally with respect to the nozzle, in order to firmly attach the filament having little deformation.

It is the **object** of the present invention to at least partially overcome the problems associated with the prior art. It is a particular object of the present invention to provide a food printer that allows a particularly precise, energy efficient, and fast printing of food using a compact food printer.

The object is achieved according to the features of the independent claims. Advantageous embodiments can be found, e.g., in the dependent claims and/or in the description.

The object is achieved by a food printer, comprising at least one seat for holding a food container and a heating means or heating device for heating a food container held in the seat, wherein the heating means comprises at least one induction coil.

By virtue of induction-based heating of food within the food container, a food printer is provided that may be constructed in a particularly compact and light-weight manner. Also, a duration to heat up the food within the food container may be significantly reduced as compared to heating by resistance heating, leading to shorter processing times. Furthermore, heat losses and heating of unwanted material volumes may be reduced, leading to a particularly high energy efficiency.

Typically, the food or food components contained in the food container is solid or highly viscous at room temperature and needs to be warmed up or heated up to be lower its viscosity and to be dispensed, in particular extruded. In one embodiment, heated-up food from the food container is dispensable from one or more openings located at its bottom, either due to its weight and/or by applying pressure to the food.

The type of food dispensable by the food printer is generally not restricted. For example, the food may be dough, pastry, sugar coating, chocolate, marzipan, fruit-based paste, vegetable-based paste, meat-based paste, fish-based paste, shellfish-based paste etc.

The heating means may comprise one or more induction coils and one or more alternating current sources connected to the one or more induction coils in any desired combination. The at least one induction coil is not provided to be heated itself and thus does not constitute a resistance heating element.

The food printer may comprise one seat or several seats. The heating means may comprise one set of at least one induction coil and at least one alternating current source for one seat or for multiple sets for multiple seats.

The food printer may be a 3D food printer.

It is an embodiment that each (one or several) seat is adapted (e.g., designed and arranged) to hold a cylindrical food container in vertical alignment. A bottom face of the food container may comprise at least a central feed-through for dispensing the food. The feed-through may be a simple opening or a tubular tip. Such a food container may also be called a syringe-shaped container or syringe. The feed-through may be centrally located in the bottom face. With respect to the food container, the bottom face may also be regarded as a front face. Generally, the bottom face may also comprise multiple feed-throughs.

It is an embodiment that the food printer comprises a printer head, wherein the printer head comprises a face (in the following, without restriction, called a "connection face") for connecting with a bottom face of a bottom wall of the food container, wherein the connection face comprises at least one opening, and wherein at least one induction coil is positioned at the connection face (e.g. in the vicinity or close neighbourhood of the connection face or inlayed in the connection face). This embodiment gives the advantage that the food contained in a bottom zone of the food container may specifically heated to facilitate dispensing heated or warmed-up food. The opening of the connecting face allows food to be dispensed through it. Connecting the connection face with the bottom face of the food container may include bringing the connection face in contact with the bottom face or may include positioning the connection face at a short distance from the bottom face. That the connection face is "for connecting" with a bottom face may include that the connection face may be (adapted to be) brought into (contacting or contactless) connection with the bottom face of the food container held in the seat, e.g. by inserting the food container into the seat and/or by moving the printer head towards a held food container. The at least one opening of the connection face may be flush (in particular, arranged concentrically) with the feed-through(s) of the food container if the food container is held in its seat.

In one embodiment, the printer head is used to hold the food container and may thus be regarded as part of the seat.

In one embodiment, the printer head is not necessary to hold the food container. In this case, a seat may comprise one or more holding devices (like grips, etc.) for holding the food container. This embodiment gives the advantage that the printer head may be movable from the bottom face of the food container. This, in turn, facilitates connecting different food containers with the same printer head at different times, thus simplifying the design of the food printer.

It is an embodiment that the connection face of the printer head is formed as a truncated cone for connecting with the bottom face of the food container of similar shape. This further facilitates dispensing food through the opening(s).

It is an alternative or additional embodiment that the printer head comprises at least one tubular through-hole for inserting a respective tubular tip of the food container and at least one induction coil is positioned around the through-hole. This gives the advantage that the food contained in the tip may specifically heated to avoid solidification in the tip. The tubular through-hole(s) may extent from respective opening(s) of the connection face of the printer head.

It is an alternative or additional embodiment that the printer head or the seat comprises at least one induction coil provided to be positioned abutting a side wall of the food container. This gives the advantage that the food contained in a zone distant from the dispensing opening(s) may specifically heated to facilitate continuously feeding larger amounts of food. In one variant, the at least one alternating current source is not located in the printer head but may generally also be part of the printer head.

Generally, the food printer may comprise at least one induction coil per seat to heat different zones of the food container held in the seat. This allows to heat different volumes of food within the food container to improve consistently dispensing the food even at large volumes. For example, food near the bottom of the food container (i.e., in a bottom zone and/or at the tip) maybe heated to a lower temperature than food in zone more distanced from the bottom (i.e., in an upper zone), or vice versa.

It is an embodiment that alternating currents may be individually applied to respective induction coils, in particular dependent on the specific food contained in a food container. This allows adapting the heating power introduced into different zones of the food.

In case that there are several induction coils present per seat, it is one embodiment that each of the induction coils is connectable to a respective alternating current source. This advantageously allows individually adapting electrical power to different induction coils. It is also an embodiment that one alternating current source is connectable to several induction coils. This gives the advantage of a particularly simple design. It is also possible that one or more induction coils are connectable to a certain alternating current source and one or more other induction coils are connected to another alternating current source.

An induction coil may be connected to its alternating current source by cables, contact pins, etc. Use of contact pins advantageously allows easy connection and disconnection of the induction coil from its alternating current source (e.g. for removing the printer head which does not comprise the alternating current source), while the cable provides a particularly reliable and cost-effective electric connection.

It is an embodiment that the seat comprises at least one induction-heatable body and the at least one induction coil is adapted or provided to heat the at least one induction body by inductive heating. An "induction-heatable body" may be any dedicated body for heating the food into which a significant induction current may be induced by an alternating magnetic field generated by the at least one induction coil. This gives the advantage that the food container itself does not need to comprise an induction-heatable body and may thus be constructed in a particularly simple, light and/or cost-effective manner. For example, the food container may be made of non-metallic material. The induction-heatable body may also be called an "induction heatable element".

It is also an embodiment that the printer head is a "non-heated printer head ", i.e., a printer head that is not itself heated by induction. In this case, the induction heating is generated or caused in the food container. In particular, a non-heated printer head may lack a dedicated induction-heatable body. This embodiment achieves an especially energy-effective heating. Furthermore, the printer head and/or seat may advantageously be designed in a particularly light-weight and cost-effective manner.

Particularly in case that the printer head is a non-heated printer head, the induction coil(s) may be sandwiched between an inner layer and an outer layer of the printer head that serve as a bracket or holder for the induction coil(s). The inner layer may comprise the connection face to connect with the food container. If the printer head is a non-heated printer head, at least the inner layer is a layer that is not heatable by an alternating magnetic field, i.e., an inductively non-sensitive layer.

In one variant, the induction coil(s) may be moulded into a moulding material surrounding the induction coil(s), for example by using an injection moulding process. This gives a particularly cost-effective and robust design. However, the inner layer and the outer layer may also be separately manufactured layers.

It is an embodiment that the food printer contains several seats and only one printer head. In this case, the printer head may be individually connected to a seat in which a food container is seated that is scheduled to be used for food dispensing. For example, the seats may be movable (e.g. rotatable) to be individually moved into as "dispensing position" in which the printer head may be brought into connection with a food container held in the seat being in the dispensing position.

It is another embodiment that the food printer contains several seats and each seat is simultaneously connectable to a respective printer head of a group comprising multiple printer heads.

Generally, if the food printer contains several seats, the seats may be movable, for example linearly movable or rotatable to and from one or more printer heads.

It is an embodiment that the at least one seat is removably attached to the food printer. This gives the advantage that the food container may be stored in its seat at locations different from the food printer. For example, the food container may be stored in its seat at a pre-heating facility and may be transferred to the food printer in a pre-heated state. This further accelerates food-printing.

It is an embodiment that the food printer comprises a temperature controlling means to control or adjust a temperature of the food contained in the food container. In one embodiment, the temperature controlling means comprises at least one temperature sensor and comprises a controller connected to the at least one temperature sensor and the at least one alternating current source, the data controller adapted to adjust an alternating current flowing through the at least one alternating current source based on sensor readings from the at least one temperature sensor. The temperature controlling means then is or functions as a thermostat. In particular, the controller is adapted to adjust the alternating current in order to set the temperature read from the temperature sensor to a pre-defined or desired value. This gives the advantage that a temperature of a volume of food to be dispensed from the food container can be precisely set. At least one temperature sensor may be integrated in the printer head. At least one temperature sensor may be attached to an induction-heatable body. At least one temperature sensor may be attached to the food container, preferably at an inner side of the food container. At least one temperature sensor may be connected to the controller by wire. At least one temperature sensor may be a wirelessly readable sensor, e.g. an RFID sensor.

Alternatively or additionally, the temperature controlling means may control a temperature of the food in the food container by controlling the alternating current flowing through the at least one alternating current source. In this case, the strength of the alternating current is used an indicator of the food temperature. A correlation between the strength of the alternating current and the food temperature may be stored in a database and be used to set a desired strength of the alternating current to reach a desired food temperature.

It is an embodiment that the temperature controlling means is a self-adjusting temperature controlling means, e.g. a self-learning means or "artificial intelligence" (Al) means that is adapted to learn to set the strength of the alternating current flowing through the at least on induction coil to set a desired temperature of the food.

The object is also achieved by a food container comprising at least one induction-heatable body, in particular if at least one induction-heatable body is positioned in the vicinity of a dispensing opening of the food container. In one variant, at least one induction-heatable body is placed at the bottom of the food container surrounding a dispensing opening. Such a food container advantageously allows an especially energy-effective heating.

It is an embodiment that an internal space of the food container holding the food is lined by a layer made of food-insensitive or food-safe material. This food-safe layer may be a material that is not sensitive to induction, i.e. does not generate an inductive current when exposed to a magnetic field produced by the at least one induction coil. The food-safe layer may be positioned on the induction-heatable body. The food-safe material may, for example, be a plastic material, ceramic material, polytetrafluoroethylene (PTFE), etc.

It is an embodiment that the at least one induction-heatable body is fixedly integrated into the food container, for example by being moulded into the food container. This gives the advantage that particularly robust food container is achieved.

It is another embodiment that the at least one induction-heatable body is removably attached to the food container, for example by inserting the at least one induction-heatable body into an internal space of the food container. This gives the advantage that the at least one induction-heatable body may be removed for cleaning and/or recycling. Particularly for this case, the at least one induction-heatable body may be coated with food-safe material. In one variant, the at least one induction-heatable body may be loosely inserted into the food container.

It is an embodiment that at least one induction-heatable body is positioned at a side wall of the food container, e.g. integrated into the wall or abutting the wall, particularly abutting an inner face of the wall.

It is an embodiment that at least one induction-heatable body is positioned within the internal space of the food container spaced apart from a wall. This gives the advantage that even a volume of food contained in the food container distant from a wall can be heated with particular effectiveness. This, in turn, allows a particularly homogeneous heating or warming-up of the food or food component inside the food container.

The least one induction-heatable body is positioned within the internal space of the food container may, e.g., be disc-shaped.

It is an embodiment that of the food printer and/or the food container that the at least one induction-heatable body is metallic. It is an embodiment that the at least one induction-heatable body comprises ferromagnetic material. This gives the advantage that the energy of the alternating current is transferred into heat in a particularly effective manner. For example, the ferromagnetic material may be steel, in particular stainless steel. In one variant, the induction-heatable body is a single piece of induction-heatable material, in particular metal. In another variant, the induction-heatable body comprises induction-heatable particles, in particular ferromagnetic particles, located within a matrix material that itself may or may not be induction-heatable.

The object is also achieved by a system, comprising the food printer as described above and at least one food container, and particularly at least one food container seated into a respective seat of the food printer.

It is an embodiment that the system comprises the food printer having at least one non-heated printer head and at least one food container, wherein the food container comprises at least one induction-heatable body and the at least one induction coil of the food printer is adapted to heat the at least one induction body of the food container by inductive heating. This gives the advantage that heat is transferred to the food within a food container in a particularly energy-effective manner.

The object is further achieved by a method for operating a food printer, wherein an alternating electrical current is applied to at least one induction coil of the food printer and the at least one induction coil generates an alternating magnetic field which generates a dissipative induction current in at least one induction-heatable body that is in thermal contact with food of a food container seated in a seat of the food printer. The method may be embodied in analogy to the food printer and/or food container and/or system as described above and achieves the same advantages.

The above described features and advantages of the invention as well as their kind of implementation will now be schematically described in more detail by at least one embodiment in the context of one or more figures.

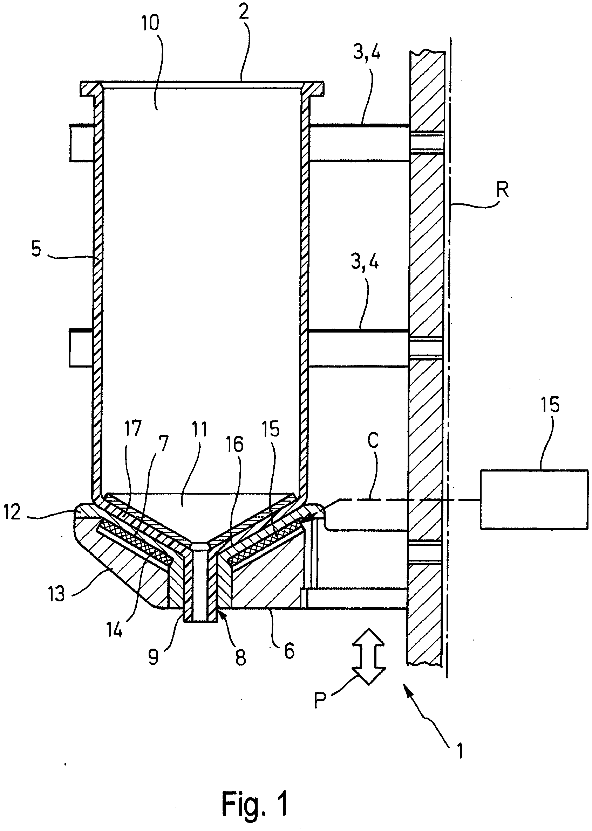

**FIG.1** shows a simplified cross-sectional side view of a food printer 1 and a cylindrical food container 2. The food container 2 may be recyclable. It may be a reusable food container 2 or may be disposable.

The partially shown food printer 1 comprises several seats for holding the food container 2, of which one seat 3 is shown in a dispensing position. The seat 3 comprises two claws 4 for gripping a side wall 5 of the food container 2 such that he food container 2 is vertically aligned in the seat 3. The seats 3 may be rotatable around a rotation axis R so that each can be brought into the dispensing position.

The food printer 1 further comprises a printer head 6 to contact a bottom face 7 or bottom wall 17 of the food container 2.

The printer head 6 is vertically movable, as indicated by the arrow P. To connect the printer head 6 to a food container 2, the printer head 6 is moved to a lower position, then a food container 2 is brought into the dispensing position, and then the printer head 6 is moved upwards towards the bottom face 7 until a connection face 16 of the printer head 6 contacts the bottom face 7. The claws 4 hold the food container 2 even when the printer head 6 is removed.

The printer head 6 comprises a central tubular through-hole 8 extending from a central position of the connection face 16 for inserting a central feed-through of the food container 2 in form of a tubular tip 9. The tip 9 extends outwardly from a bottom face 7 and is connected to an interior space 10 of the food container 2. The bottom wall 17 of the food container 2 comprising the bottom face 7 and the side wall 5 of are made of a non-metallic material, e.g. a plastic material. The non-metallic material is transparent to or not heatable by an alternating magnetic field. The bottom wall 17 and the side wall 5 of the food container 2 may be coated with a food-safe layer (not shown), at least on a surface facing the interior space 10.

The bottom wall 17 and the bottom face 7 have a form of a truncated cone. Inserted into the food container 2 and abutting the bottom wall 17 at its inner side is an induction-heatable body in form of a disk 11 shaped like a truncated cone. Thus, the disk 11 is in planar contact with the bottom wall 17. The disk 11 is made of a ferromagnetic material like stainless steel and may be coated with a food-safe layer (not shown). The disk 11 may be fixed to the bottom wall 17. It may be removable, e.g. for recycling.

The printer head 6 comprises an inner layer 12 and an outer layer 13 between which is sandwiched an induction coil 14. The inner layer 12 and the outer layer 13 constitute a bracket for holding the induction coil 14. The induction coil 14 is connected to a current source (indicated by 15) for generating an alternating current C. The induction coil 14 is located opposite the disk 11 occupying a cone-shaped space. The induction coil 14 is separated from the disk 11 only by the inner layer 12 and the bottom wall 17. Thus, the induction coil 14 is positioned near the disk 11.

When the alternating current source 15 is energized, it creates an alternating current C that flows through induction coil 14. The induction coil 14 generates an alternating magnetic field that induces an induction current in the disk 11. The induction current C is dissipated to heat such that the disk 11 acts as an inductive heating element and can heat or warm-up food contained in the internal space 10, in particular a food volume in a bottom zone of the internal space 10 in the vicinity of the disk 11. Therefore, the printer head 6 is a non-heated printer head 6 since the heat is primarily dissipated in the disk 11.

If the food is sufficiently heated, it may flow through the central opening tip 9 and be dispensed.

The strength of the alternating current C may be adjusted by a temperature controlling means (not shown) controlling the temperature of the disk 11.

Additionally or alternatively, the side wall 5 and/or the tip 9 may be equipped with induction-heatable bodies, e.g. steel tubes (not shown). Also, the seat 3 may be provided with induction coils, e.g. to specifically induce an induction current in induction-heatable bodies of the side wall 5 and/or the tip 9 (not shown). This would allow heating different zones of the food container 2.

The food printer 1 give the advantage that the induction heating concept allows much faster heating of the food within the food container 2 to a desired temperate compared to heating a printer head by resistance heating, e.g. up to 10 times faster. This, in turn, advantageously shortens processing times. In particular, by placing the disk 11 inside the internal space 10 of the food container 2, the body of the food container 2 is only slightly heated and the printer head 6 is not significantly heated, as compared to heating via a heated printer head. This, in turn, results in accelerated heating of the food and in reduced heat losses, thus achieving a higher energy efficiency.

Of course, the invention is not restricted to the described embodiments.

Generally, the above described invention achieves one or more of the following advantages:
- Compact design,
- Small weight,
- Reduced material requirements and thus reduced costs,
- Particularly short warm-up duration,
- Faster heating and thus shorter food dispensing lengths of time
- High energy efficiency.

### List of Reference Signs

- 1: Food printer
- 2: Food container
- 3: Seat
- 4: Claw
- 5: Side wall of the food container
- 6: Printer head
- 7: Bottom face of the food container
- 8: Through-hole
- 9: Tip
- 10: Interior space of the food container
- 11: Disk
- 12: Inner layer
- 13: Outer layer
- 14: Induction coil
- 15: Current source
- 16: Connection face
- 17: Bottom wall of the food container
- C: Alternating electric current
- P: Arrow
- R: Rotation axis

## Claims

1. A food printer (1), comprising
- at least one seat (3) for holding a food container (2) and
- a heating means (14, 15) for heating a food container (2) held in the seat (3), wherein
- the heating means (14, 15) comprises at least one induction coil (14).

2. The food printer (1) according to claim 1, comprising a printer head (6), wherein the printer head (6) comprises a connection face (16) for connecting with a bottom face (7) of the food container (2), wherein the connection face (16) comprises at least one opening (8), and wherein at least one induction coil (14) is positioned at the connection face.

3. The food printer (1) according to any of the preceding claims, wherein the food printer (1) comprises at least one induction coil (14) to heat different zones of the food container (2).

4. The food printer according to any of the preceding claims, wherein the seat (3) comprises at least one induction-heatable body and the at least one induction coil (14) is adapted to heat the at least one induction-heatable body by inductive heating.

5. The food printer (1) according to any of the claims 1 to 3, wherein the printer head (6) is a non-heated printer head (6).

6. The food printer (1) according to any of the preceding claims, wherein the food printer (1) contains several seats (3) and only one printer head (6).

7. The food printer (1) according to any of the preceding claims, wherein the at least one seat (3) is removably attached to the food printer (1).

8. A food container (2) for being inserted into the food printer (1) according to any of the preceding claims, the food container (2) comprising at least one induction-heatable body (11).

9. The food container (2) according to claim 8, wherein the at least one induction-heatable body (11) is removably attached to the food container (2).

10. The apparatus (1; 2) according to any of the claims 4 to 9, wherein the at least one induction-heatable body (11) comprises ferromagnetic material.

11. A system (1, 2), comprising the food printer (1) according to claim 5 and at least one food container (2) according to any of the claims 8 to 9, wherein the food container (2) is held in a seat (3) and the at least one induction coil (14) of the food printer (1) is adapted to heat the at least one induction-heatable body (11) of the food container (2) by inductive heating.

12. A method for operating a food printer (1), wherein an alternating electrical current (C) is applied to at least one induction coil (14) of the food printer (1) and the at least one induction coil (14) generates an alternating magnetic field which generates a dissipative induction current in at least one induction-heatable body (11) that is in thermal contact with food of a food container (2) held in a seat (3) of the food printer (1).
